# EUROPÄISCHE PATENTSCHRIFT

(11) **EP 2 927 353 B1**
(45) Veröffentlichungstag und Bekanntmachung des Hinweises auf die Patenterteilung: **29.08.2018**
(21) Anmeldenummer: 15162415.2
(22) Anmeldetag: 02.04.2015
(51) Int. Cl.: D01H 1/115, D01H 13/30

(54) **LUFTSPINNMASCHINE SOWIE VERFAHREN ZUM BETRIEB EINER LUFTSPINNMASCHINE**
AIR JET SPINNING MACHINE AND METHOD FOR THE OPERATION OF AN AIR JET SPINNING MACHINE
MÉTIER À FILER À JET D'AIR ET PROCÉDÉ DE FONCTIONNEMENT D'UN MÉTIER À FILER À JET D'AIR

(30) Priorität: 03.04.2014 CH 5212014
(43) Veröffentlichungstag der Anmeldung: 07.10.2015
(73) Patentinhaber: MASCHINENFABRIK RIETER AG, 8406 Winterthur (CH)
(72) Erfinder: Fischer, Andreas, 8266 Steckborn (CH); Arbogast, Markus, 89522 Heidenheim (DE); Ricaurte-Rubio, Javier-Orlando, 73033 Göppingen (DE); Schäffler, Gernot, 73116 Wäschenbeuren (DE)
(74) Vertreter: Baudler, Ron

(56) Entgegenhaltungen:
- EP-A1- 0 465 781
- EP-A2- 2 450 478
- DE-A1- 4 122 216

## Beschreibung

Die vorliegende Erfindung betrifft eine Luftspinnmaschine mit wenigstens einer, zumindest eine Spinndüse umfassenden, Spinnstelle, wobei die Spinnstelle der Herstellung eines Garns aus einem der Spinndüse zugeführten Faserverband dient, wobei die Spinndüse einen Einlass für den Faserverband, eine innenliegende Wirbelkammer, ein in die Wirbelkammer ragendes Garnbildungselement, sowie einen Auslass für das im Inneren der Wirbelkammer erzeugte Garn aufweist, und wobei die Spinndüse mehrere in die Wirbelkammer mündende Luftdüsen aufweist, die mit wenigstens einer Luftversorgungsleitung in Fluidverbindung stehen, wobei während des Betriebs der Luftspinnmaschine von der Luftversorgungsleitung bereitgestellte Druckluft über die Luftdüsen in die Wirbelkammer einströmt, um innerhalb der Wirbelkammer eine Wirbelluftströmung zu erzeugen.

Darüber hinaus wird Verfahren zum Betrieb einer Luftspinnmaschine vorgeschlagen, wobei die Luftspinnmaschine wenigstens eine Spinnstelle aufweist, wobei die Spinnstelle zumindest eine Spinndüse aufweist, wobei der Spinndüse während des Betriebs der Spinnstelle ein Faserverband über einen Einlass zugeführt wird, und wobei die Spinndüse mehrere in die Wirbelkammer mündende Luftdüsen aufweist, die mit wenigstens einer Luftversorgungsleitung in Fluidverbindung stehen, wobei während des Betriebs der Luftspinnmaschine von der Luftversorgungsleitung bereitgestellte Druckluft über die Luftdüsen in die Wirbelkammer einströmt, um innerhalb der Wirbelkammer eine Wirbelluftströmung zu erzeugen wobei der Faserverband innerhalb einer Wirbelkammer der Spinndüse mit Hilfe der Wirbelluftströmung eine Drehung erhält, so dass aus dem Faserverband ein Garn gebildet wird, das die Spinnstelle schließlich über einen Auslass verlässt.

Luftspinnmaschinen mit entsprechenden Spinnstellen sind im Stand der Technik bekannt und dienen der Herstellung eines Garns aus einem länglichen Faserverband. Die äußeren Fasern des Faserverbands werden hierbei mit Hilfe einer durch die Luftdüsen innerhalb der Wirbelkammer erzeugten Wirbelluftströmung im Bereich einer Einlassmündung des Garnbildungselements um die innenliegenden Kernfasern gewunden und bilden schließlich die für die gewünschte Festigkeit des Garns ausschlaggebenden Umwindefasern. Hierdurch entsteht ein Garn mit einer echten Drehung, welches schließlich über einen Abzugskanal aus der Wirbelkammer abgeführt und z. B. auf eine Hülse aufgewickelt werden kann.

Generell ist im Sinne der Erfindung unter dem Begriff Garn also ein Faserverband zu verstehen, bei dem zumindest ein Teil der Fasern um einen innenliegenden Kern gewunden sind. Umfasst ist somit ein Garn im herkömmlichen Sinne, das beispielsweise mit Hilfe einer Webmaschine zu einem Stoff verarbeitet werden kann. Ebenso betrifft die Erfindung jedoch auch Luftspinnmaschinen, mit deren Hilfe sogenanntes Vorgarn (andere Bezeichnung: Lunte) hergestellt werden kann. Diese Art Garn zeichnet sich dadurch aus, dass sie trotz einer gewissen Festigkeit, die ausreicht, um das Garn zu einer nachfolgenden Textilmaschine zu transportieren, noch immer verzugsfähig ist. Das Vorgarn kann also mit Hilfe einer Verzugseinrichtung, z. B. dem Streckwerk, einer das Vorgarn verarbeitenden Textilmaschine, beispielsweise einer Ringspinnmaschine, verzogen werden, bevor es endgültig versponnen wird.

Bei der Herstellung von Chemiefasern, beispielsweise Polyester, oder Gemischen aus Natur- und Chemiefasern entstehen Ablagerungen auf der Oberfläche des Garnbildungselements. Die Herstellung von Chemiefasern umfasst eine sogenannte Präparation der Endlosfasern während des Herstellungsprozesses. Dabei wird auf die Endlosfasern ein Präparationsmittel, meist Öle mit verschiedenartigen Zusätzen, aufgebracht, welches eine Behandlung, wie beispielsweise Strecken der Endlosfasern bei hohen Geschwindigkeiten, ermöglicht. Diese Präparationsmittel bleiben teilweise an den Chemiefasern auch in der weiteren Behandlung haften und führen in der Luftspinnmaschine zu Verunreinigungen. Die der Luftspinnmaschine in Form eines Faserverbandes zugeführten Fasern werden in der Regel durch ein Lieferwalzenpaar der Spinndüse zugeführt. Das Lieferwalzenpaar kann einem Ausgangswalzenpaar eines Streckwerks entsprechen. Zur Anwendung kommende Streckwerke dienen einer Verfeinerung des vorgelegten Faserverbandes vor dem Eintritt in die Spinndüse.

Im Eintrittsbereich der Spinndüse ist in der Regel ein Faserführungselement angeordnet, über welches der Faserverband in die Spinndüse und schließlich in den Bereich des Garnbildungselements geführt wird. Als Garnbildungselemente werden mehrheitlich Spindeln mit einem innenliegenden Abzugskanal verwendet. An der Spitze des Garnbildungselementes wird durch die Gehäusewandung der Spinndüse Druckluft derart eingebracht, dass sich die genannte rotierende Wirbelluftströmung ergibt. Dies führt dazu, dass aus dem das Faserführungselement verlassenden Faserverband einzelne außenliegende Fasern abgetrennt und über die Spitze des Garnbildungselementes umgeschlagen werden. Im weiteren Verlauf rotieren diese herausgelösten Fasern auf der Oberfläche des Garnbildungselementes. In der Folge werden durch die Vorwärtsbewegung der innenliegenden Kernfasern des Faserverbandes die rotierenden Fasern um die Kernfasern gewunden und dadurch das Garn gebildet. Durch die Bewegung der einzelnen Fasern über die Oberfläche des Garnbildungselementes bilden sich auf dem Garnbildungselement jedoch auch Ablagerungen aufgrund der Anhaftungen an den Fasern aus dem Herstellungsprozess. Ablagerungen können aus denselben Gründen auch auf der Oberfläche des Spinndüseninnenraumes oder des Faserführungselementes entstehen. Diese Anhaftungen führen zu einer Verschlechterung der Oberflächenbeschaffenheit des Garnbildungselementes und verursachen eine Verschlechterung der hergestellten Garnqualität. Eine regelmäßige Reinigung der betroffenen Oberflächen ist daher notwendig, um eine gleichbleibende Qualität der gesponnen Garne aufrechterhalten zu können.

Die Reinigung der Oberflächen des Garnbildungselementes, des Spinndüseninnenraumes und des Faserführungselementes kann manuell durch einen periodischen Ausbau des Garnbildungselementes erfolgen, was jedoch zu einem nicht unerheblichen Wartungsaufwand, verbunden mit einem entsprechenden Betriebsausfall, führt.

Die EP 2 450 478 offenbart hingegen eine Vorrichtung, welche es erlaubt, eine automatische Reinigung ohne Stillsetzen der Maschine auszuführen. Zu diesem Zweck wird der für die Bildung der Wirbelluftströmung innerhalb der Spinndüse verwendeten Druckluft ein Additiv beigemischt. Das Additiv wird durch die Druckluft an das Garnbildungselement geführt und bewirkt eine Reinigung der Oberfläche des Garnbildungselementes.

Alternativ zeigt die DE 41 22 216 A1 eine Lösung, bei der das Additiv über das Faserführungselement in die Wirbelkammer eingebracht wird.

Eine weitere Ausführung einer Reinigung des Garnbildungselementes offenbart die JP-2008-095-208. Ein Additiv wird ebenfalls der für die Verwirbelung in der Spinndüse verwendeten Druckluft zugeführt und mit dieser Druckluft in die Spinndüse und damit an das Garnbildungselement geführt. Die Dosierung und Zugabe des Additivs ist in der offenbarten Ausführung für jede Spinnstelle separat vorgesehen.

Darüber hinaus ist es bekannt, Additiv dem Faserverband zuzuführen, um die Eigenschaften des daraus hergestellten Garns, beispielsweise im Hinblick auf dessen Haarigkeit, Festigkeit, Dehnung und Garngleichmäßigkeit, zu verbessern, wobei die Dosierung besonders genau regelbar sein sollte, um zu verhindern, dass auf einzelne Faserverbandabschnitte mehr oder weniger als die vorgegebenen Additivsollmenge aufgebracht wird.

Aufgabe der vorliegenden Erfindung ist es daher, eine Luftspinnmaschine sowie ein Verfahren zum Betrieb einer Luftspinnmaschine vorzuschlagen, die eine besonders zuverlässige und einfach zu regulierende Versorgung einer oder mehrerer Spinnstellen mit Additiv ermöglichen.

Die Aufgabe wird gelöst durch eine Luftspinnmaschine und ein Verfahren mit den Merkmalen der unabhängigen Patentansprüche.

Erfindungsgemäß zeichnet sich Luftspinnmaschine dadurch aus, dass sie eine Additivversorgung aufweist, die ausgebildet ist, die Spinnstelle mit einem Additiv zu versorgen, wobei die Additivversorgung einen Druckbehälter umfasst, in dem das Additiv für die Weiterleitung in den Bereich der Spinnstelle vorgehalten wird und in dem darüber hinaus ein gasförmiges Druckmedium enthalten ist. Ferner umfasst die Additivversorgung wenigstens eine unabhängig von der genannten Luftversorgungsleitung verlaufende Additivversorgungsleitung, über die der Druckbehälter mit einer Additivabgabe verbunden ist, und über die das Additiv der Spinndüse unabhängig von der über die Luftversorgungsleitung in die Wirbelkammer eingebrachten Druckluft zuführbar ist. Die Luftspinnmaschine umfasst also wenigstens zwei unabhängige Versorgungssysteme, wobei eines der Druckluftversorgung der Luftdüsen und ein zweites der Additivversorgung der Spinndüse(n) dient. Hierdurch wird es möglich, den im Druckbehälter herrschenden Druck, der sich bei sonst konstanten Bedingungen direkt auf den Volumen- bzw. Massenstrom des Additivs auswirkt, unabhängig vom Druck der für die Garnherstellung notwendigen Druckluft, die über die Luftdüsen in die Wirbelkammer einströmt, zu regulieren.

Der Druckbehälter ist hierfür teilweise mit Additiv und teilweise mit einem gasförmigen Druckmedium, vorzugsweise Druckluft, gefüllt. Durch den vom Druckmedium auf das Additiv wirkenden Druck wird dieses schließlich über eine oder mehrere Additivversorgungsleitungen in den Bereich der Additivabgabe(n) befördert. Dort tritt es aus dem System der Additivversorgung aus und gelangt entweder ins Innere der Spinndüse oder auf den in die Spinndüse einlaufenden Faserverband.

Als Additiv können flüssige oder auch feste Substanzen (bzw. Mischungen derselben) zum Einsatz kommen, wobei Wasser oder eine wässrige Lösung (z. B. eine Reinigungslösung) bevorzugt wird. Der Druckbehälter kann durch ein geschlossenes und druckdichtes Metallbehältnis gebildet sein, das vorzugsweise an einem Rahmenelement bzw. Trägerelement der Luftspinnmaschine fixiert ist.

In einer Weiterbildung der Erfindung es vorteilhaft, wenn die Additivabgabe im Bereich der Spinndüse angeordnet ist, wobei die Additivabgabe beispielsweise durch eine Hohlnadel, einen Spraykopf oder einen Auslassbereich eines Kanalabschnitts gebildet sein kann. Insbesondere ist es denkbar, die Additivabgabe im Bereich des Einlasses der Spinndüse, insbesondere im Bereich eines dort angeordneten Faserführungselements, zu platzieren, um das Additiv auf den Faserverband aufbringen zu können, bevor dieser in die Wirbelkammer eintritt. Alternativ kann die Additivabgabe auch direkt in die Spinndüse bzw. die Wirbelkammer münden, um das Additiv ins Innere der Spinndüse abgeben zu können.

Des Weiteren ist es vorteilhaft, wenn der Absolutdruck innerhalb des Druckbehälters einen Betrag aufweist, der zwischen 1,1 bar und 8,0 bar, bevorzugt zwischen 1,5 bar und 7,0 bar, liegt. Während ein geringer Druck ausreicht, um das Additiv an einer Stelle abzugeben, der lediglich dem Umgebungsluftdruck der Spinnstelle ausgesetzt ist, kann ein höherer Druck sinnvoll sein, wenn das Additiv in einem Bereich abgegeben werden soll, der bereits mit einem Überdruck beaufschlagt ist, beispielsweise dem Innenraum der Wirbelkammer. Zusätzlich bzw. alternativ kann der Druck auf in Abhängigkeit des Betriebs der Luftspinnmaschine geändert werden. Beispielsweise wäre es denkbar, den Druck während eines Reinigungsbetriebs, während dessen das Additiv der Reinigung der Spinndüse dient, gegenüber dem Druck zu erhöhen, der während des Normalbetriebs gewählt wird, bei dem das Additiv vorrangig dazu dient, die Eigenschaften des fertigen Garns zu verbessern. In diesem Fall würde die Druckerhöhung zu einer Erhöhung der Additivabgabe während des Reinigungsbetriebs führen.

Vorteilhaft ist es zudem, wenn die Luftspinnmaschine mehrere Spinnstellen umfasst, wobei die Additivabgaben zumindest eines Teils der Spinnstellen, vorzugsweise aller Spinnstellen, über Additivversorgungsleitungen mit einem gemeinsamen Druckbehälter in Fluidverbindung stehen. Beispielsweise könnte die Luftspinnmaschine zwei gegenüberliegende Spinnstellenreihen umfassen, wobei jede Reihe mit einem gemeinsamen Druckbehälter in Verbindung stehen könnte. Alternativ hierzu können selbstverständlich auch alle Spinnstellen mit nur einem Druckbehälter in Verbindung stehen, so dass der Druckbehälter zentral platziert und einfach nachfüllbar wäre. In diesem Zusammenhang ist es sinnvoll, die Additivversorgungsleitungen zumindest teilweise flexibel zu gestalten, um eine wartungsbedingte Bewegung der jeweils mit der Additivversorgungsleitung verbundenen Spinndüsen bzw. einzelner Komponenten derselben zu ermöglichen.

Auch ist es von Vorteil, wenn der Druckbehälter mit einer Hauptversorgungsleitung in Verbindung steht, von der die Additivversorgungsleitungen der einzelnen Spinnstellen abzweigen. Im Übrigen sollten die einzelnen Additivversorgungsleitungen ein regelbares Ventil umfassen, um den Massen- bzw. Volumenstrom des die entsprechenden Additivversorgungsleitungen passierenden Additivs (vorzugsweise individuell für jede Spinnstelle) regulieren zu können, wobei zusätzlich oder alternativ auch der Druck im Druckbehälter variiert werden kann, um die Additivabgabe im Bereich der Spinndüsen quantitativ regulieren zu können.

Ebenso bringt es Vorteile mit sich, wenn die Additivversorgungsleitung(en) und/oder die oben genannte Hauptversorgungsleitung ein Handventil umfassen, das manuell geöffnet und geschlossen werden kann. Die Additivzufuhr zu allen oder ausgewählten Spinndüsen kann hierdurch schnell und zuverlässig unterbunden werden, ohne dass der Druck im Druckbehälter entsprechend reduziert werden muss.

Besondere Vorteile bringt es mit sich, wenn der Druckbehälter mit einem Drucklufterzeuger in Verbindung steht. Bei dem Drucklufterzeuger handelt es sich vorzugsweise um einen Kompressor, der Umgebungsluft ansaugt und in komprimierter Form in den Druckbehälter einbringt. Alternativ oder zusätzlich ist es ebenso denkbar, dass der Druckbehälter mit der Druckluftversorgung der Luftspinnmaschine in Verbindung steht, wobei es sich hierbei um ein Druckluftleitungsnetz der Luftspinnmaschine oder auch ein Druckluftnetz einer Spinnerei handeln kann, an das auch die Luftspinnmaschine angeschlossen ist, wobei dem Druckbehälter in jedem Fall ein Drosselventil vorgeschaltet sein kann, um den Druck im Druckbehälter regulieren zu können.

Vorteilhaft ist es, wenn der Druckbehälter mit einem Additivspeicher in Verbindung steht, wobei dem Druckbehälter ein Sensor zur Überwachung des Additivfüllstands des Druckbehälters zugeordnet sein kann. Bei dem Additivspeicher kann es sich beispielsweise um ein Behältnis handeln, welches seinerseits unter einem Druck steht, der höher ist als der Druck im Inneren des Druckbehälters. Additiv würde in diesem Fall automatisch in den Druckbehälter nachströmen, sobald ein entsprechendes Ventil, das sich in einer den Druckbehälter und den Additivspeicher verbindenden Leitung angeordnet sein kann, geöffnet wird. Alternativ kann das Additiv auch mit einer Pumpe in den Druckbehälter gefördert werden. Sowohl das genannte Ventil als auch die Pumpe können mit einer Steuerung verbunden sein, die das Ventil öffnet oder die Pumpe aktiviert, sobald der Sensor einen Additivfüllstand meldet, der unterhalb eines Sollwerts liegt. Selbstverständlich können das Ventil und/oder die Pumpe auch manuell betreibbar sein, wobei der genannte Sensor ausgebildet sein kann, lediglich den Additivfüllstand anzuzeigen, ohne mit einer Steuerung verbunden zu sein.

Ebenso ist es vorteilhaft, wenn der Druckbehälter und/oder der Additivspeicher und/oder eine den Druckbehälter und den Additivspeicher verbindende Leitung ein Ventil aufweist, wobei sich die Ventilstellung in Abhängigkeit des Additivfüllstands des Druckbehälters selbsttätig ändert, so dass der Additivfüllstand stets ein zwischen zwei Grenzwerten liegendes Niveau aufweist. Das Ventil kann beispielsweise mit einem Schwimmer in Verbindung stehen, der innerhalb des Druckbehälters angeordnet ist und sich in Abhängigkeit des Additivfüllstands hebt oder senkt.

Ebenso kann es von Vorteil sein, wenn der Druckbehälter und/oder der Additivspeicher und/oder eine den Druckbehälter und den Additivspeicher verbindende Leitung oder auch die entsprechende Haupt- bzw. die jeweiligen Additivversorgungsleitungen einen Filter zum Filtern des Additivs aufweisen. Unabhängig von der genauen Position des Filters kann es notwendig sein, das Additiv, vorzugsweise vor dem Eintritt in das oben genannte Ventil, zu filtern, um zu verhindern, dass Verunreinigungen in das Ventil, die Additivabgabe oder die Spinndüse gelangen. Beispielsweise wäre es denkbar, einen Partikelfilter und/oder einen Kalkfilter einzusetzen. Der Filter ist vorzugsweise lösbar fixiert, um ihn leicht austauschen und reinigen zu können.

Des Weiteren ist es vorteilhaft, wenn die jeweiligen Additivversorgungsleitungen und/oder die Additivabgaben jeweils ein Mittel zur Regelung des Volumenstroms und/oder des Massenstroms des über die jeweiligen Additivabgaben abgegebenen Additivs aufweisen. Bei dem Mittel handelt es sich beispielsweise um ein Ventil, welches manuell oder mit Hilfe einer Steuerung regelbar ist, um die Menge des das Ventil passierenden Additivs ändern zu können, wobei das Ventil in dem oben genannten Reinigungsbetrieb eine andere Stellung aufweisen kann als im genannten Normalbetrieb.

Ebenso wäre es denkbar, dass die Stellung der einzelnen Ventile beim Übergang zwischen Normalbetrieb und Reinigungsbetrieb unverändert bleibt und die Menge des im Bereich der Spinndüsen abgegebenen Additivs zentral durch Änderung des Drucks im Druckbehälter geändert wird (relativ hoher Druck während des Reinigungsbetriebs gegenüber relativ geringem Druck während des Normalbetriebs).

Das erfindungsgemäße Verfahren zum Betrieb einer Luftspinnmaschine zeichnet sich dadurch aus, dass der bzw. den Spinnstelle(n) während des Betriebs der Luftspinnmaschine zumindest zeitweise ein Additiv mit Hilfe einer Additivversorgung zugeführt wird. Die Additivversorgung umfasst unter anderem einen, vorzugsweise spinnmaschineneigenen, Druckbehälter, in dem Additiv für die Weiterleitung in den Bereich der Spinndüse(n) vorgehalten wird. Darüber hinaus enthält der Druckbehälter ein gasförmiges Druckmedium, vorzugsweise in Form von Druckluft, wobei der Druck des Druckmediums so hoch gewählt ist, dass aufgrund des in dem Druckbehälter herrschenden Drucks zumindest zeitweise Additiv vom Druckbehälter an eine oder mehrere Additivabgabe(n) der Spinnstelle(n) weitergeleitet wird. Die Weiterleitung erfolgt schließlich mit Hilfe von unabhängig von der Luftversorgungsleitung verlaufenden Additivversorgungsleitungen. Hinsichtlich des Additivs sowie körperlicher Merkmale der Luftspinnmaschine wird auf die bisherige sowie nachfolgende Beschreibung verwiesen, wobei das Verfahren im Zusammenhang mit Luftspinnmaschinen zum Einsatz kommen kann, die eines oder mehrere der genannten Merkmale aufweist.

Vorteilhaft ist es, wenn das Additiv mit Hilfe der Additivabgabe auf den Faserverband aufgebracht und/oder in die Spinndüse eingebracht wird. Beispielsweise ist es denkbar, dass das Additiv außerhalb der Spinndüse oder im Bereich des Faserführungselements auf den Faserverband aufgebracht und gemeinsam mit diesem in die Wirbelkammer der Spinndüse eingebracht wird. Das Additiv dient je nach Volumen- bzw. Massenstrom entweder der Verbesserung der Eigenschaften des aus dem Faserverband hergestellten Garns oder der Reinigung der Wirbelkammer bzw. des Garnbildungselements, wobei der Faserverband in diesem Fall die Reinigung durch mechanischen Kontakt mit den jeweiligen Oberflächen der Wirbelkammer bzw. des Garnbildungselements unterstützt. Selbstverständlich kann die oben genannte Additivabgabe auch direkt in die Wirbelkammer münden, um das Additiv unabhängig vom Faserverband in diese einbringen zu können.

Vorteilhaft ist es zudem, wenn der Additivfüllstand des Druckbehälters mit Hilfe eines Sensors überwacht wird, wobei bei Unterschreiten eines Grenzwerts des Additivfüllstands Additiv von einem Additivspeicher in den Druckbehälter abgegeben wird, bis ein vorgegebener Additivfüllstand erreicht ist. Der Druckbehälter verfügt in diesem Fall stets über eine ausreichende Menge an Additiv, um die angeschlossenen Spinnstellen entsprechend versorgen zu können. Beim Additivspeicher kann es sich um eine unter Druck stehende Kartusche oder ein sonstiges Behältnis handeln, dass beispielweise über eine Pumpe mit dem Druckbehälter verbunden sein kann oder selbst unter einem erhöhten Druck steht.

Ebenso bringt es Vorteile mit sich, wenn die Luftspinnmaschine mehrere Spinnstellen umfasst, wobei das Additiv zumindest zeitweise vom Druckbehälter in eine oder mehrere Hauptversorgungsleitungen und von dort über, von der oder den Hauptversorgungsleitungen abzweigende, Additivversorgungsleitungen zu den jeweiligen Additivabgaben der Spinndüsen strömt. Das Additiv wird in diesem Fall beispielsweise von einem zentralen Druckbehälter stammend auf mehrere Additivversorgungsleitungen aufgeteilt und den jeweiligen Spinnstellen bzw. deren Spinndüsen zugeführt.

Vorteilhaft ist es, wenn der Druckbehälter mit einem Absolutdruck beaufschlagt wird, dessen Betrag zwischen 1,1 bar und 8,0 bar, bevorzugt zwischen 1,5 bar und 7,0 bar, liegt. Der Druck kann unter anderem in Abhängigkeit davon gewählt werden, ob die Luftspinnmaschine in dem oben genannten Reinigungsbetrieb oder dem ebenfalls bereits genannten Normalbetrieb betrieben wird, wobei im Reinigungsbetrieb ein Druck von wenigstens 3 bar ratsam ist und der Druck im Normalbetrieb unterhalb dieses Wertes liegen sollte.

Weitere Vorteile der Erfindung sind in den nachfolgenden Ausführungsbeispielen beschrieben. Es zeigen:
- **Figur** 1: einen Ausschnitt der Spinnstelle einer Luftspinnmaschine,
- **Figur** 2: einen Ausschnitt einer Spinnstelle einer erfindungsgemäßen Luftspinnmaschine,
- **Figur** 3: eine Prinzipskizze eines Ausschnitts einer erfindungsgemäßen Luftspinnmaschine, und
- **Figur** 4: einen Ausschnitt einer erfindungsgemäß zum Einsatz kommenden Additivversorgung.

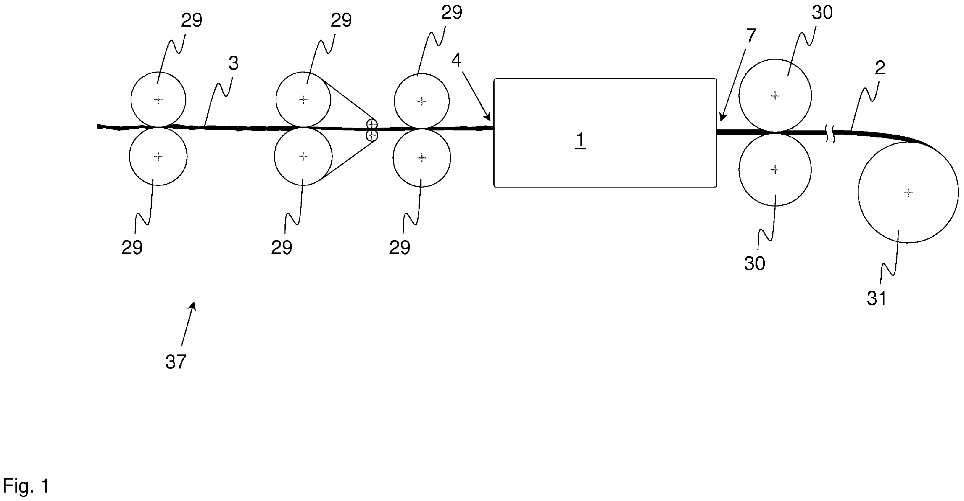

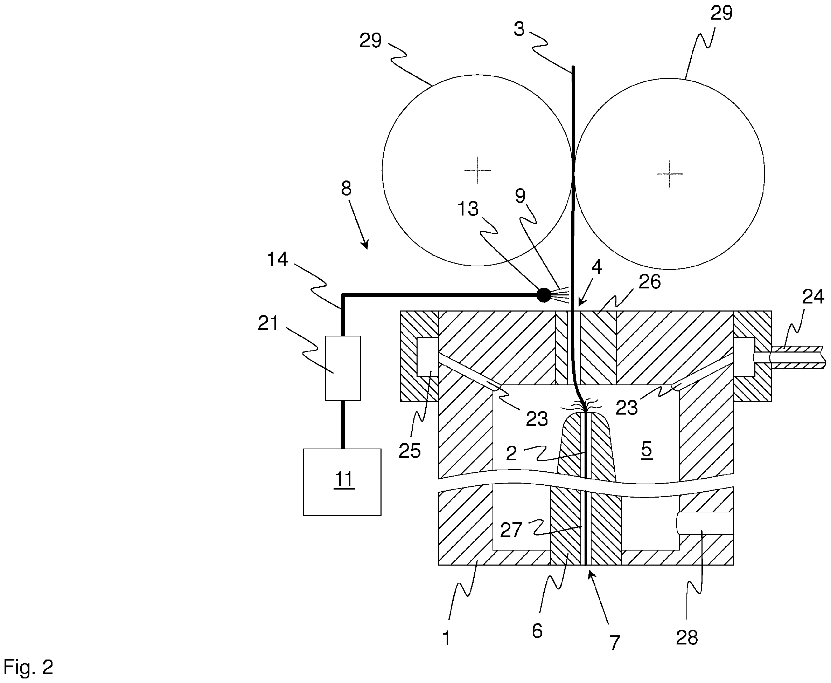

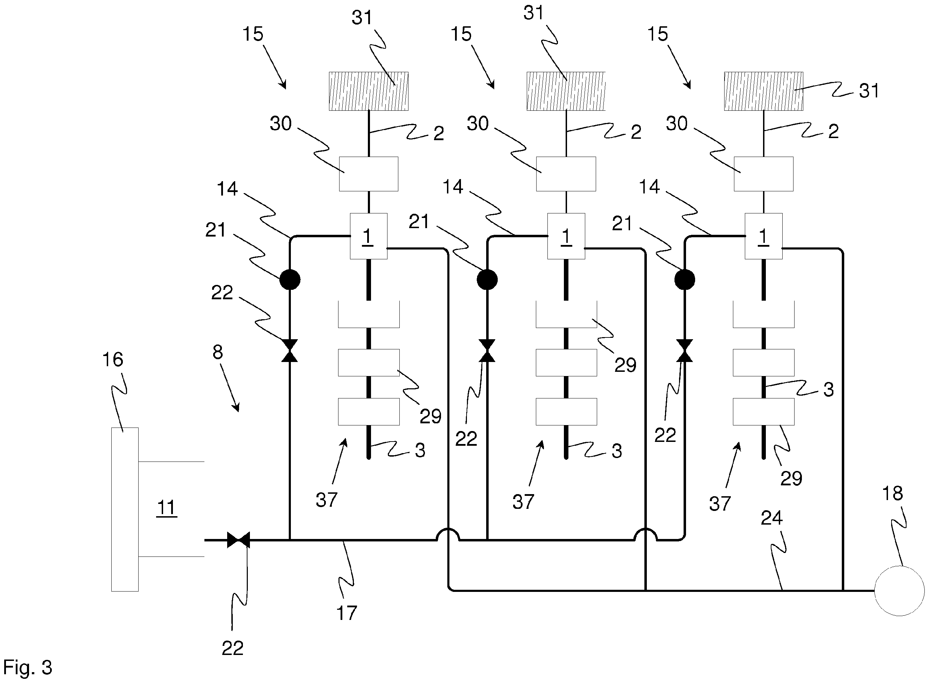

Figur 1 zeigt einen Ausschnitt einer Spinnstelle 15 einer erfindungsgemäßen Luftspinnmaschine (wobei die Luftspinnmaschine selbstverständlich eine Vielzahl von, vorzugsweise benachbart zueinander angeordneten, Spinnstellen 15 aufweisen kann, wie dies in Figur 3 gezeigt ist). Die Luftspinnmaschine kann bei Bedarf ein Streckwerk 37 mit mehreren Streckwerkswalzen 29 umfassen, welches mit einem Faserverband 3, beispielsweise in Form eines doublierten Streckenbands, beliefert wird. Ferner umfasst die gezeigte Spinnstelle 15 eine in Figur 2 näher dargestellte Spinndüse 1 mit einer innenliegenden Wirbelkammer 5, in welcher der Faserverband 3 bzw. mindestens ein Teil der Fasern des Faserverbands 3 nach Passieren eines Einlasses 4 der Spinndüse 1 mit einer Drehung versehen wird (die genaue Wirkungsweise der Spinnstelle 15 wird im Folgenden noch näher beschrieben).

Darüber hinaus kann die Luftspinnmaschine ein der Spinndüse 1 nachgeordnetes und zwei Abzugswalzen 30 aufweisendes Abzugswalzenpaar sowie eine dem Abzugswalzenpaar nachgeschaltete Spulvorrichtung 31 zum Aufspulen des die Spinnstelle 15 verlassenden Garns 2 auf eine Hülse umfassen. Die erfindungsgemäße Spinnstelle 15 muss nicht zwangsweise ein Streckwerk 37 aufweisen. Auch ist das Abzugswalzenpaar nicht zwingend notwendig.

Die gezeigte Spinnstelle 15 arbeitet generell nach einem Luftspinnverfahren. Zur Bildung des Garns 2 wird der Faserverband 3 über ein, mit einer den genannten Einlass 4 bildenden Eintrittsöffnung versehenes, Faserführungselement 26 in die Wirbelkammer 5 der Spinndüse 1 geführt. Dort erhält es eine Drehung, d. h. mindestens ein Teil der freien Faserenden des Faserverbands 3 wird von einer Wirbelluftströmung, die durch entsprechend in einer die Wirbelkammer 5 umgebenden Wirbelkammerwandung angeordnete Luftdüsen 23 erzeugt wird, erfasst. Ein Teil der Fasern wird hierbei aus dem Faserverband 3 zumindest ein Stück weit herausgezogen und um die Spitze eines in die Wirbelkammer 5 ragenden Garnbildungselements 6 gewunden. Dadurch, dass der Faserverband 3 durch eine Einlassmündung des Garnbildungselements 6 über einen innerhalb des Garnbildungselements 6 angeordneten Abzugskanal 27 aus der Wirbelkammer 5 und schließlich über einen Auslass 7 aus der Spinndüse 1 abgezogen wird, werden schließlich auch die freien Faserenden in Richtung der Einlassmündung gezogen und schlingen sich dabei als sogenannte Umwindefasern um die zentral verlaufenden Kernfasern - resultierend in einem die gewünschte Drehung aufweisenden Garn 2. Die über die Luftdüsen 23 eingebrachte Druckluft verlässt die Spinndüse 1 schließlich über den Abzugskanal 27 sowie einen eventuell vorhandene Luftauslass 28, der bei Bedarf mit einer Unterdruckquelle verbunden sein kann.

Generell sei an dieser Stelle klargestellt, dass es sich bei dem hergestellten Garn 2 grundsätzlich um einen beliebigen Faserverband 3 handeln kann, der sich dadurch auszeichnet, dass ein außenliegender Teil der Fasern (sogenannte Umwindefasern) um einen inneren, vorzugsweise ungedrehten oder bei Bedarf ebenfalls gedrehten Teil der Fasern, herumgeschlungen ist, um dem Garn 2 die gewünschte Festigkeit zu verleihen. Umfasst ist von der Erfindung also auch eine Luftspinnmaschine, mit deren Hilfe sich sogenanntes Vorgarn herstellen lässt. Bei Vorgarn handelt es sich um ein Garn 2 mit einem relativ geringen Anteil an Umwindefasern, bzw. um ein Garn 2, bei dem die Umwindefasern relativ locker um den inneren Kern geschlungen sind, so dass das Garn 2 verzugsfähig bleibt. Dies ist dann entscheidend, wenn das hergestellte Garn 2 an einer nachfolgenden Textilmaschine (beispielsweise einer Ringspinnmaschine) nochmals mit Hilfe eines Streckwerks 37 verzogen werden soll bzw. muss, um entsprechend weiterverarbeitet werden zu können.

Im Hinblick auf die Luftdüsen 23 sei an dieser Stelle zudem rein vorsorglich erwähnt, dass diese in der Regel so ausgerichtet sein sollten, dass die austretenden Luftstrahlen gleichgerichtet sind, um gemeinsam eine gleichgerichtete Luftströmung mit einem Drehsinn zu erzeugen. Vorzugsweise sind die einzelnen Luftdüsen 23 hierbei rotationssymmetrisch zueinander angeordnet und münden tangential in die Wirbelkammer 5.

Erfindungsgemäß ist der Spinnstelle 15 nun eine Additivversorgung 8 zugeordnet, die ein oder mehrere das Additiv 9 bereitstellende Druckbehälter 11 sowie eine oder mehrerer, vorzugsweise zumindest teilweise flexible, Additivversorgungsleitungen 14 umfasst, über die der jeweilige Additivspeicher 19 mit einer im Bereich der oder innerhalb der Spinndüse 1 angeordneten Additivabgabe 13 in Fluidverbindung steht (hinsichtlich möglicher Additive 9 wird auf die bisherige Beschreibung verwiesen).

In diesem Zusammenhang sei darauf hingewiesen, dass das Additiv 9 an unterschiedlicher Stelle abgegeben werden kann. Während in Figur 2 eine Ausführungsform gezeigt ist, bei der sich die Additivabgabe 13 im Bereich des Einlasses 4 der Spinndüse 1, beispielsweise im Bereich deren Faserführungselements 26, befindet (so dass das Additiv 9 direkt auf den Faserverband 3 aufgebracht werden kann), kann das Additiv 9 auch über eine, beispielsweise ringförmig verlaufende und mit einer Luftversorgungsleitung 24 in Verbindung stehende, Luftverteilung 25 eingebracht werden. Das Additiv 9 gelangt in diesem Fall über die Luftdüsen 23 in die Wirbelkammer 5.

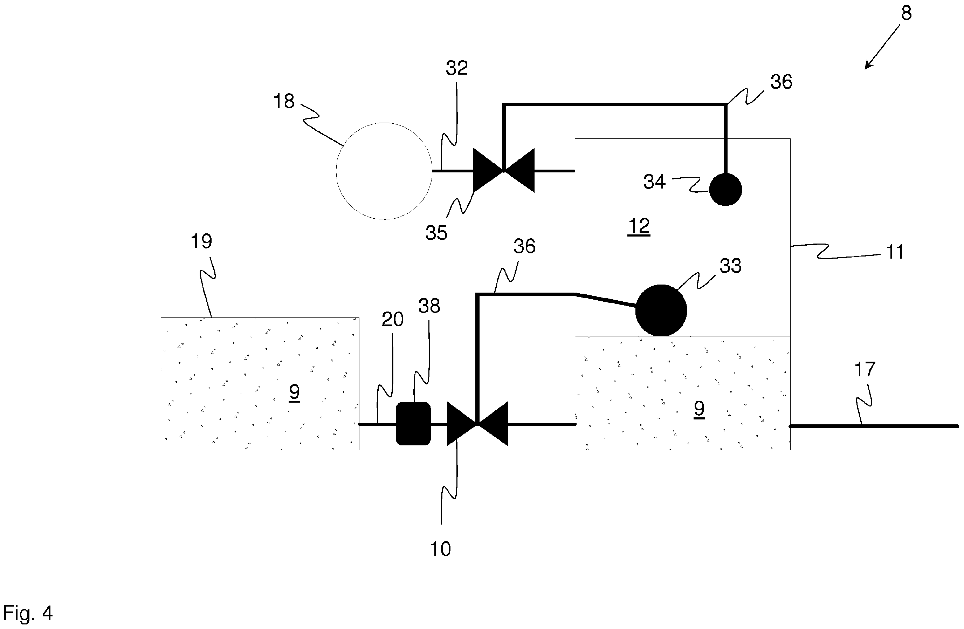

Wie nun den Figuren 2 und 3 zu entnehmen ist, ist der Druckbehälter 11 vorzugsweise an einem von den Spinndüsen 1 beabstandeten Ort angeordnet (beispielsweise an einem Träger 16 bzw. einem Rahmenelement der Luftspinnmaschine). Vorzugsweise ist der Druckbehälter 11 mit einer Hauptversorgungsleitung 17 verbunden, von der wiederum mehrere, den einzelnen Spinnstellen 15 zugeordnete Additivversorgungsleitungen 14 abzweigen. Die Luftspinnmaschine umfasst somit ein Leitungssystem, über das die einzelnen Spinndüsen 1 mit Additiv 9 versorgbar sind, wobei das Leitungssystem unabhängig von den einzelnen Luftversorgungsleitungen 24 verläuft, über die die Luftdüsen 23 der Spinndüsen 1 mit Druckluft versorgt werden und die in der Regel mit einer Druckluftversorgung 18 der Luftspinnmaschine in Verbindung stehen. Der Druck innerhalb des mit Bezug auf Figur 4 noch näher erläuterten Druckbehälters 11 kann somit unabhängig vom Druck der über die Luftdüsen 23 einströmenden Druckluft geregelt bzw. eingestellt werden, so dass auch die Dosierung des über die Additivabgaben 13 abgegebenen Additivs 9 unabhängig reguliert werden kann.

Wie Figur 3 des Weiteren zu entnehmen ist, können die einzelnen Additivversorgungsleitungen 14 jeweils ein Mittel 21 zur Regelung des Volumenstroms und/oder des Massenstroms des über die Additivabgaben 13 abgegebenen Additivs 9 umfassen, das vorzugsweise durch ein manuell oder mit Hilfe einer Steuerung regulierbares Ventil gebildet wird.

Ferner kann in die Hauptversorgungsleitung 17 und/oder in einzelne oder alle Additivversorgungsleitungen 14 ein Handventil 22 integriert sein, welches manuell betätigbar ist und mit dessen Hilfe einzelne Abschnitte des genannten Leitungssystems abgesperrt werden können (beispielsweise, um entsprechende Abschnitte oder damit verbundene Baugruppen der Luftspinnmaschine warten zu können).

Eine mögliche Ausgestaltung bzw. Einbindung des Druckbehälters 11 zeigt Figur 4. Wie dieser Figur zu entnehmen, ist der Druckbehälter 11 mit Additiv 9 sowie einem gasförmigen Druckmedium 12, vorzugsweise Druckluft, befüllt, wobei die Druckluft aus der Druckluftversorgung 18 der Luftspinnmaschine bzw. einem mit dieser verbundenen Druckluftleitung stammen kann. Der Druckbehälter 11 steht in seinem unteren Bereich mit der genannten Hauptversorgungsleitung 17 in Verbindung, über die das Additiv 9 den Spinnstellen 15 bzw. den Additivversorgungsleitungen 14 zugeführt wird. Ferner kann der Druckbehälter 11 mit einem Additivspeicher 19 in Verbindung stehen, aus dem Additiv 9 in den Druckbehälter 11 geleitet wird, wenn der Additivfüllstand unter einen Grenzwert fällt.

Um ein automatisches Nachfüllen des Druckbehälters 11 zu ermöglichen, kann in die den Druckbehälter 11 mit dem Additivspeicher 19 verbindende Leitung 20 ein Ventil 10 integriert sein, dass automatisch öffnet, wenn der Additivfüllstand unter den genannten Grenzwert fällt und wieder schließt, wenn ein oberer Grenzwert erreicht wird. Hierfür steht das Ventil 10 beispielsweise mit einem Sensor 33 in Wirkverbindung, der ausgebildet ist, den Additivfüllstand zu überwachen. Beispielsweise kann der Sensor 33 einen Schwimmer umfassen, der sich mit dem Niveau des Additivs 9 hebt oder senkt.

Der Additivspeicher 19 kann zudem über eine entsprechende Leitung 32 selbst mit einer Druckluftquelle in Verbindung stehen, um einen Transport des Additivs 9 in Richtung des Druckbehälters 11 zu ermöglichen. Ebenso ist es denkbar, dem Additivspeicher 19 oder dem Druckbehälter 11 eine Pumpe zuzuordnen, die den genannten Transport bewirkt.

Des Weiteren kann der Druckbehälter 11 einen Drucksensor 34 aufweisen, mit dem der im Druckbehälter 11 vorherrschende Druck des gasförmigen Druckmediums 12 messbar bzw. überwachbar ist. Der Drucksensor 34 kann seinerseits, z. B. über eine entsprechende Verbindung 36, mit einem Druckventil 35 (bzw. Drosselventil) in Wirkverbindung stehen, das sich vorzugsweise in der den Druckbehälter 11 und die Druckluftversorgung 18 verbindende Leitung 32 der Luftspinnmaschine befindet. Durch Zusammenspiel von Drucksensor 34 und Druckventil 35 kann schließlich der Druck innerhalb des Druckbehälters 11 auf Basis entsprechender Grenzwerte bzw. Vorgaben geregelt werden.

Schließlich kann in die den Additivspeicher 19 und den Druckbehälter 11 verbindende Leitung 20 ein Filter 38 integriert sein, mit dessen Hilfe sich im Additiv 9 enthaltene Verunreinigungen ausfiltern lassen. Der Filter 38 kann selbstverständlich auch Bestandteil des Additivspeichers 19 oder des Druckbehälters 11 sein. Ebenso ist es möglich, den Filter 38 in die Hauptversortungsleitung 17 und/oder eine oder mehrere der Additivversorgungsleitungen 14 zu integrieren.

Die vorliegende Erfindung ist nicht auf die dargestellten und beschriebenen Ausführungsbeispiele beschränkt. Abwandlungen im Rahmen der Patentansprüche sind ebenso möglich wie eine beliebige Kombination der beschriebenen Merkmale, auch wenn sie in unterschiedlichen Teilen der Beschreibung bzw. den Ansprüchen oder in unterschiedlichen Ausführungsbeispielen dargestellt und beschrieben sind, vorausgesetzt, dass sie nicht gegen die Lehre der unabhängigen Ansprüche verstoßen.

### Bezugszeichenliste

- 1: Spinndüse
- 2: Garn
- 3: Faserverband
- 4: Einlass der Spinndüse
- 5: Wirbelkammer
- 6: Garnbildungselement
- 7: Auslass der Spinndüse
- 8: Additiwersorgung
- 9: Additiv
- 10: Ventil
- 11: Druckbehälter
- 12: gasförmiges Druckmedium
- 13: Additivabgabe
- 14: Additivversorgungsleitung
- 15: Spinnstelle
- 16: Träger der Luftspinnmaschine
- 17: Hauptversorgungsleitung
- 18: Druckluftversorgung der Luftspinnmaschine
- 19: Additivspeicher
- 20: den Druckbehälter und den Additivspeicher verbindende Leitung
- 21: Mittel zur Regelung des Volumenstroms und/oder des Massenstroms des über die Additivabgabe abgegebenen Additivs
- 22: Handventil
- 23: Luftdüse
- 24: Luftversorgungsleitung
- 25: Luftverteilung
- 26: Faserführungselement
- 27: Abzugskanal
- 28: Luftauslass
- 29: Streckwerkswalze
- 30: Abzugswalze
- 31: Spulvorrichtung
- 32: den Druckbehälter und die Druckluftversorgung verbindende Leitung
- 33: Sensor zur Überwachung des Additivfüllstands des Druckbehälters
- 34: Drucksensor
- 35: Druckventil
- 36: Verbindung
- 37: Streckwerk
- 38: Filter

## Patentansprüche

1. Luftspinnmaschine mit wenigstens einer, zumindest eine Spinndüse (1) umfassenden, Spinnstelle (15),
- wobei die Spinnstelle (15) der Herstellung eines Garns (2) aus einem der Spinndüse (1) zugeführten Faserverband (3) dient,
- wobei die Spinndüse (1) einen Einlass (4) für den Faserverband (3),
- eine innenliegende Wirbelkammer (5),
- ein in die Wirbelkammer (5) ragendes Garnbildungselement (6), sowie
- einen Auslass (7) für das im Inneren der Wirbelkammer (5) erzeugte Garn (2) aufweist,
- wobei die Spinndüse (1) mehrere in die Wirbelkammer (5) mündende Luftdüsen (23) aufweist, die mit wenigstens einer Luftversorgungsleitung (24) in Fluidverbindung stehen, wobei während des Betriebs der Luftspinnmaschine von der Luftversorgungsleitung (24) bereitgestellte Druckluft über die Luftdüsen (23) in die Wirbelkammer (5) einströmt, um innerhalb der Wirbelkammer (5) eine Wirbelluftströmung zu erzeugen, und
- wobei die Luftspinnmaschine eine Additivversorgung (8) aufweist, die ausgebildet ist, die Spinnstelle (15) mit einem Additiv (9) zu versorgen,
**dadurch gekennzeichnet, dass** die Luftspinnmaschine wenigstens zwei unabhängige Versorgungssysteme umfasst, wobei eines der Druckluftversorgung der Luftdüsen (23) und ein zweites der Additivversorgung der Spinndüse (1) dient,
- dass die Additivversorgung (8) einen Druckbehälter (11) umfasst, in dem Additiv (9) für die Weiterleitung in den Bereich der Spinnstelle (15) vorgehalten wird und in dem ein gasförmiges Druckmedium (12) enthalten ist,
- wobei die Additivversorgung (8) wenigstens eine unabhängig von der Luftversorgungsleitung (24) verlaufende Additivversorgungsleitung (14) umfasst, über die der Druckbehälter (11) mit einer Additivabgabe (13) verbunden ist, und über die das Additiv (9) der Spinndüse (1) unabhängig von der über die Luftversorgungsleitung (24) in die Wirbelkammer (5) eingebrachten Druckluft zuführbar ist.

2. Luftspinnmaschine gemäß dem vorangegangenen Anspruch, **dadurch gekennzeichnet, dass** die Additivabgabe (13) im Bereich der Spinndüse (1) angeordnet ist.

3. Luftspinnmaschine gemäß einem der vorangegangenen Ansprüche, **dadurch gekennzeichnet, dass** der Absolutdruck innerhalb des Druckbehälters (11) einen Betrag aufweist, der zwischen 1,1 bar und 8,0 bar, bevorzugt zwischen 1,5 bar und 7,0 bar, liegt.

4. Luftspinnmaschine gemäß einem der vorangegangenen Ansprüche, **dadurch gekennzeichnet, dass** die Luftspinnmaschine mehrere Spinnstellen (15) umfasst, wobei die Additivabgaben (13) zumindest eines Teils der Spinnstellen (15), vorzugsweise aller Spinnstellen (15), über Additivversorgungsleitungen (14) mit einem gemeinsamen Druckbehälter (11) in Fluidverbindung stehen.

5. Luftspinnmaschine gemäß dem vorangegangenen Anspruch, **dadurch gekennzeichnet, dass** der Druckbehälter (11) mit einer Hauptversorgungsleitung (17) in Verbindung steht, von der die Additivversorgungsleitungen (14) der einzelnen Spinnstellen (15) abzweigen.

6. Luftspinnmaschine gemäß einem der vorangegangenen Ansprüche, **dadurch gekennzeichnet, dass** die Additivversorgungsleitung(en) (14) und/oder die in Anspruch 5 genannte Hauptversorgungsleitung (17) ein Handventil (22) umfassen, das manuell geöffnet und geschlossen werden kann.

7. Luftspinnmaschine gemäß einem der vorangegangenen Ansprüche, **dadurch gekennzeichnet, dass** der Druckbehälter (11) mit einem Drucklufterzeuger und/oder einer Druckluftversorgung (18) der Luftspinnmaschine in Verbindung steht.

8. Luftspinnmaschine gemäß einem der vorangegangenen Ansprüche, **dadurch gekennzeichnet, dass** der Druckbehälter (11) mit einem Additivspeicher (19) in Verbindung steht, wobei dem Druckbehälter (11) ein Sensor (33) zur Überwachung des Additivfüllstands des Druckbehälters (11) zugeordnet ist.

9. Luftspinnmaschine gemäß einem der vorangegangenen Ansprüche, **dadurch gekennzeichnet, dass** der Druckbehälter (11) und/oder der Additivspeicher (19) und/oder eine den Druckbehälter (11) und den Additivspeicher (19) verbindende Leitung (20) einen Filter (38) zum Filtern des Additivs (9) und/oder ein Ventil (10) aufweist, wobei sich die Ventilstellung in Abhängigkeit des Additivfüllstands des Druckbehälters (11) selbsttätig ändert.

10. Luftspinnmaschine gemäß einem der vorangegangenen Ansprüche, **dadurch gekennzeichnet, dass** die jeweiligen Additivversorgungsleitungen (14) und/oder die Additivabgaben (13) jeweils ein Mittel (21) zur Regelung des Volumenstroms und/oder des Massenstroms des über die jeweiligen Additivabgaben (13) abgegebenen Additivs (9) aufweisen.

11. Verfahren zum Betrieb einer Luftspinnmaschine,
- wobei die Luftspinnmaschine wenigstens eine Spinnstelle (15) aufweist,
- wobei die Spinnstelle (15) zumindest eine Spinndüse (1) aufweist,
- wobei der Spinndüse (1) während des Betriebs der Spinnstelle (15) ein Faserverband (3) über einen Einlass (4) zugeführt wird,
- wobei die Spinndüse (1) mehrere in die Wirbelkammer (5) mündende Luftdüsen (23) aufweist, die mit wenigstens einer Luftversorgungsleitung (24) in Fluidverbindung stehen, wobei während des Betriebs der Luftspinnmaschine von der Luftversorgungsleitung (24) bereitgestellte Druckluft über die Luftdüsen (23) in die Wirbelkammer (5) einströmt, um innerhalb der Wirbelkammer (5) eine Wirbelluftströmung zu erzeugen,
- wobei der Faserverband (3) innerhalb einer Wirbelkammer (5) der Spinndüse (1) mit Hilfe der Wirbelluftströmung eine Drehung erhält, so dass aus dem Faserverband (3) ein Garn (2) gebildet wird, das die Spinnstelle (15) schließlich über einen Auslass (7) verlässt, und
- wobei der Spinnstelle (15) während des Betriebs der Luftspinnmaschine zumindest zeitweise ein Additiv (9) mit Hilfe einer Additivversorgung (8) zugeführt wird, **dadurch gekennzeichnet, dass** die Luftspinnmaschine wenigstens zwei unabhängige Versorgungssysteme umfasst, wobei eines der Druckluftversorgung der Luftdüsen (23) und ein zweites der Additivversorgung der Spinndüse (1) dient,
- dass die Additivversorgung (8) einen Druckbehälter (11) umfasst, in dem Additiv (9) für die Weiterleitung in den Bereich der Spinnstelle (15) vorgehalten wird und in dem ein gasförmiges Druckmedium (12) enthalten ist,
- wobei aufgrund des in dem Druckbehälter (11) herrschenden Drucks zumindest zeitweise Additiv (9) vom Druckbehälter (11) an eine Additivabgabe (13) der Spinnstelle (15) weitergeleitet wird, wobei die Weiterleitung mit Hilfe einer unabhängig von der Luftversorgungsleitung (24) verlaufenden Additivversorgungsleitung (14) erfolgt.

12. Verfahren gemäß dem vorangegangenen Anspruch, **dadurch gekennzeichnet, dass** das Additiv (9) mit Hilfe der Additivabgabe (13) auf den Faserverband (3) aufgebracht und/oder in die Spinndüse (1) eingebracht wird.

13. Verfahren gemäß Anspruch 11 oder 12, **dadurch gekennzeichnet, dass** der Additivfüllstand des Druckbehälters (11) mit Hilfe eines Sensors (33) überwacht wird, und dass bei Unterschreiten eines Grenzwerts des Additivfüllstands Additiv (9) von einem Additivspeicher (19) in den Druckbehälter (11) abgegeben wird, bis ein vorgegebener Additivfüllstand erreicht ist.

14. Verfahren gemäß einem der Ansprüche 11 bis 13, **dadurch gekennzeichnet, dass** die Luftspinnmaschine mehrere Spinnstellen (15) umfasst, wobei das Additiv (9) zumindest zeitweise vom Druckbehälter (11) in eine oder mehrere Hauptversorgungsleitungen (17) und von dort über, von der oder den Hauptversorgungsleitungen (17) abzweigende, Additivversorgungsleitungen (14) zu den jeweiligen Additivabgaben (13) der Spinndüsen (1) strömt.

15. Verfahren gemäß einem der Ansprüche 11 bis 14, **dadurch gekennzeichnet, dass** der Druckbehälter (11) mit einem Absolutdruck beaufschlagt wird, dessen Betrag zwischen 1,1 bar und 8,0 bar, bevorzugt zwischen 1,5 bar und 7,0 bar, liegt.

## Claims

1. Air jet spinning machine with at least one spinning station (15) comprising at least one spinning nozzle (1),
- whereas the spinning station (15) serves the purpose of producing a yarn (2) from a fiber composite (3) fed to the spinning nozzle (1),
- whereas the spinning nozzle (1) features an inlet (4) for the fiber composite (3),
- an internal vortex chamber (5),
- a yarn formation element (6) protruding into the vortex chamber (5), along with
- an outlet (7) for the yarn (2) produced inside the vortex chamber (5),
- whereas the spinning nozzle (1) features multiple air nozzles (23) leading into the vortex chamber (5), which are in fluid connection with at least one air supply line (24), whereas, during the operation of the air jet spinning machine, compressed air provided by the air supply line (24) flows through the air nozzles (23) into the vortex chamber (5) in order to generate a vortex air flow in the vortex chamber (5),
- whereas the air jet spinning machine features an additive supply (8), which is formed to provide the spinning station (15) with an additive (9),
**characterized in that**,
- the air jet spinning machine comprises at least two independent supply systems, whereas one serves the purpose of the compressed air supply of the air nozzles (23) and a second serves the purpose of the additive supply of the spinning nozzle (1),
- that the additive supply (8) comprises a pressure tank (11) in which additive (9) is held for forwarding to the area of the spinning station (15) and in which a gaseous pressure medium (12) is contained,
- whereas the additive supply (8) comprises at least one additive supply line (14) running independent of the air supply line (24), through which the pressure tank (11) is connected to an additive delivery (13), and through which the additive (9) is able to be fed to the spinning nozzle (1) independent of the compressed air introduced through the air supply line (24) into the vortex chamber (5).

2. Air jet spinning machine according to the preceding claim, **characterized in that** the additive delivery (13) is arranged in the area of the spinning nozzle (1).

3. Air jet spinning machine according to one of the preceding claims, **characterized in that** the absolute pressure within the pressure tank (11) features an amount that is between 1.1 bar and 8.0 bar, preferentially between 1.5 bar and 7.0 bar.

4. Air jet spinning machine according to one of the preceding claims, **characterized in that** the air jet spinning machine includes several spinning stations (15), whereas the additive deliveries (13) of at least a part of the spinning stations (15), preferably all spinning stations (15), are in fluid connection with a common pressure tank (11) through additive supply lines (14).

5. Air jet spinning machine according to the preceding claim, **characterized in that** the pressure tank (11) is in connection with a main supply line (17), from which the additive supply lines (14) of the individual spinning stations (15) branch off.

6. Air jet spinning machine according to one of the preceding claims, **characterized in that** the additive supply line(s) (14) and/or the main supply line (17) specified in claim 5 include a manual valve (22) that may be manually opened and closed.

7. Air jet spinning machine according to one of the preceding claims, **characterized in that** the pressure tank (11) is in connection with a compressed air generator and/or a compressed air supply (18) of the air jet spinning machine.

8. Air jet spinning machine according to one of the preceding claims, **characterized in that** the pressure tank (11) is in connection with an additive reservoir (19), whereas a sensor (33) for monitoring the additive level of the pressure tank (11) is allocated to the pressure tank (11).

9. Air jet spinning machine according to one of the preceding claims, **characterized in that** the pressure tank (11) and/or the additive reservoir (19) and/or a line (20) connecting the pressure tank (11) and the additive reservoir (19) features a filter (38) for filtering the additive (9) and/or a valve (10), whereas the valve position automatically changes depending on the additive level of the pressure tank (11).

10. Air jet spinning machine according to one of the preceding claims, **characterized in that** the respective additive supply lines (14) and/or the additive deliveries (13) each feature a means (21) for adjusting the volume flow and/or the mass flow of the additive (9) delivered through the respective additive deliveries (13).

11. Method for the operation of an air jet spinning machine,
- whereas the air jet spinning machine features at least one spinning station (15),
- whereas the spinning station (15) features at least one spinning nozzle (1),
- whereas, during the operation of the spinning station (15), a fiber composite (3) is fed to the spinning nozzle (1) through an inlet (4),
- whereas the spinning nozzle (1) features multiple air nozzles (23) leading into the vortex chamber (5), which are in fluid connection with at least one air supply line (24), whereas, during the operation of the air jet spinning machine, compressed air provided by the air supply line (24) flows through the air nozzles (23) into the vortex chamber (5) in order to generate a vortex air flow in the vortex chamber (5),
- whereas the fiber composite (3) within a vortex chamber (5) of the spinning nozzle (1) receives a twist with the assistance of the vortex air flow, such that a yarn (2) is formed from the fiber composite (3), which ultimately leaves the spinning station (15) through an outlet (7), and
- whereas the spinning station (15) is, during the operation of the air jet spinning machine, at least temporarily fed an additive (9) with the assistance of an additive supply (8),
**characterized in that**
- the air jet spinning machine comprises at least two independent supply systems, whereas one serves the purpose of the compressed air supply of the air nozzles (23) and a second serves the purpose of the additive supply of the spinning nozzle (1),
- that the additive supply (8) includes a pressure tank (11) in which the additive (9) is held for forwarding into the area of the spinning station (15) and in which a gaseous pressure medium (12) is contained,
- whereas, based on the pressure prevailing in the pressure tank (11), additive (9) from the pressure tank (11) is forwarded at least temporarily to an additive delivery (13) of the spinning station (15), whereas the forwarding takes place with the assistance of an additive supply line (14) running independent of the air supply line (24).

12. Method according to the preceding claim, **characterized in that** the additive (9) is applied to the fiber composite (3) with the assistance of the additive delivery (13) and/or is introduced into the spinning nozzle (1).

13. Method according to claim 11 or 12, **characterized in that** the additive level of the pressure tank (11) is monitored with the assistance of a sensor (33) and that, upon falling below a threshold of the additive level, additive (9) is delivered from an additive reservoir (19) into the pressure tank (11), until a given additive level is reached.

14. Method according to one of the claims 11 to 13, **characterized in that** the air jet spinning machine includes several spinning stations (15), whereas the additive (9) streams, at least partially from the pressure tank (11), into one or more main supply lines (17) and from there, through additive supply lines (14) that branch off from the main supply lines (17), to the respective additive deliveries (13) of the spinning nozzles (1).

15. Method according to one of the claims 11 to 14, **characterized in that** the pressure tank (11) is applied with an absolute pressure, the amount of which is between 1.1 bar and 8.0 bar, preferentially between 1.5 bar and 7.0 bar.

## Revendications

1. Métier à filer à jet d'air avec au moins un poste de filage (15) comportant au moins une filière de filage (1),
- dans lequel le poste de filage (15) sert à la fabrication d'un fil (2) à partir d'un ensemble de fibres (3) délivré à la filière de filage (1),
- dans lequel la filière de filage (1) comporte une admission (4) pour l'ensemble de fibres (3),
- une chambre de turbulence intérieure (5),
- un élément de formation de fil (6) faisant saillie dans la chambre de turbulence (5) ainsi que
- une sortie (7) pour le fil (2) produit à l'intérieur de la chambre de turbulence (5),
- dans lequel la filière de filage (1) comporte plusieurs buses d'air (23) débouchant dans la chambre de turbulence (5), qui sont en relation fluidique avec au moins une conduite d'alimentation en air (24), sachant que, pendant le fonctionnement du métier à filer à jet d'air, l'air comprimé délivré par la conduite (24) d'alimentation en air pénètre dans la chambre de turbulence (5) via les buses d'air (23) pour générer dans la chambre de turbulence (5) un écoulement d'air tourbillonnaire, et
- dans lequel le métier à filer à jet d'air comporte une alimentation en additif (8) qui se présente sous une forme pour alimenter le poste de filage (15) avec un additif (9), et
**caractérisé en ce que**
- le métier à filer à jet d'air comporte au moins deux systèmes d'alimentation indépendants, sachant que l'un sert à l'alimentation en air comprimé des buses d'air (23) et un second à l'alimentation en additif de la filière de filage (1),
- l'alimentation en additif (8) comporte un récipient sous pression (11), dans lequel l'additif (9) est tenu disponible pour le réacheminement dans la zone du poste de filage (15) et dans lequel est contenu un agent de pression gazeux (12),
- dans lequel l'alimentation en additif (8) comporte au moins une conduite (14) d'alimentation en additif s'étendant indépendamment de la conduite (24) d'alimentation en air, par laquelle le récipient sous pression (11) est relié avec une livraison (13) d'additif, et par laquelle l'additif (9) peut être délivré à la filière de filage (1) indépendamment de l'air comprimé injecté dans la chambre de turbulence (5) via la conduite (24) d'alimentation en air.

2. Métier à filer à jet d'air selon la revendication précédente, **caractérisé en ce que** la livraison (13) d'additif est disposée dans la zone de la filière de filage (1).

3. Métier à filer à jet d'air selon l'une des revendications précédentes, **caractérisé en ce que** la pression absolue au sein du récipient sous pression (11) présente une valeur qui se situe entre 1,1 bar et 8,0 bar, de préférence entre 1,5 bar et 7,0 bar.

4. Métier à filer à jet d'air selon l'une des revendications précédentes, **caractérisé en ce que** le métier à filer à jet d'air comporte plusieurs postes de filage (15), dans lequel les livraisons (13) d'additif au moins d'une partie des postes de filage (15), de préférence de tous les postes de filage (15), sont en relation fluidique avec un récipient sous pression (11) commun via des conduites (14) d'alimentation en additif.

5. Métier à filer à jet d'air selon la revendication précédente, **caractérisé en ce que** le récipient sous pression (11) est en relation avec une conduite d'alimentation principale (17), à partir de laquelle se dérivent les conduites (14) d'alimentation en additif des différents postes de filage (15).

6. Métier à filer à jet d'air selon l'une des revendications précédentes, **caractérisé en ce que** la/les conduite(s) (14) d'alimentation en additif et/ou la conduite d'alimentation principale (17) citée à la revendication 5 comporte(nt) une soupape manuelle (22) qui peut être ouverte et fermée manuellement.

7. Métier à filer à jet d'air selon l'une des revendications précédentes, **caractérisé en ce que** le récipient sous pression (11) est en relation avec un générateur d'air comprimé et/ou une alimentation (18) en air comprimé du métier à filer à jet d'air.

8. Métier à filer à jet d'air selon l'une des revendications précédentes, **caractérisé en ce que** le récipient sous pression (11) est en relation avec un accumulateur (19) d'additif, dans lequel un capteur (33) est attribué au récipient sous pression (11) pour la surveillance du niveau d'additif du récipient sous pression (11).

9. Métier à filer à jet d'air selon l'une des revendications précédentes, **caractérisé en ce que** le récipient sous pression (11) et/ou l'accumulateur (19) d'additif et/ou une conduite (20) reliant le récipient sous pression (11) et l'accumulateur (19) d'additif comporte un filtre (38) pour filtrer l'additif (9) et/ou une soupape (10), dans lequel la position de la soupape varie automatiquement en fonction du niveau d'additif du récipient sous pression (11).

10. Métier à filer à jet d'air selon l'une des revendications précédentes, **caractérisé en ce que** les différentes conduites (14) d'alimentation en additif et/ou les livraisons (13) d'additif comportent respectivement un moyen (21) pour la régulation du débit volumique et/ou du débit massique de l'additif (9) délivré par les livraisons (13) d'additif respectives.

11. Procédé pour exploiter un métier à filer à jet d'air,
- dans lequel le métier à filer à jet d'air comporte au moins un poste de filage (15),
- dans lequel le poste de filage (15) comporte au moins une filière de filage (1),
- dans lequel un ensemble de fibres (3) est délivré à la filière de filage (1) via une admission (4) pendant le fonctionnement du poste de filage (15),
- dans lequel la filière de filage (1) comporte plusieurs buses d'air (23) débouchant dans la chambre de turbulence (5), qui sont en relation fluidique avec au moins une conduite (24) d'alimentation en air, sachant que, pendant le fonctionnement du métier à filer à jet d'air, l'air comprimé délivré par la conduite (24) d'alimentation en air pénètre dans la chambre de turbulence (5) via les buses d'air (23) pour générer dans la chambre de turbulence (5) un écoulement d'air tourbillonnaire,
- dans lequel l'ensemble de fibres (3) obtient à l'aide de l'écoulement d'air tourbillonnaire une rotation au sein d'une chambre de turbulence (5) de la filière de filage (1), de sorte qu'un fil (2) soit formé à partir de l'ensemble de fibres (3), lequel quitte finalement le poste de filage (15) via une sortie (7), et
- dans lequel un additif (9) est délivré au moins temporairement au poste de filage (15) pendant le fonctionnement du métier à filer à jet d'air à l'aide d'une alimentation (8) en additif,
**caractérisé en ce que**
- le métier à filer à jet d'air comporte au moins deux systèmes d'alimentation indépendants, sachant que l'un sert à l'alimentation en air comprimé des buses d'air (23) et un second à l'alimentation en additif de la filière de filage (1),
- l'alimentation en additif (8) comporte un récipient sous pression (11), dans lequel l'additif (9) est tenu disponible pour le réacheminement dans la zone du poste de filage (15) et dans lequel est contenu un agent de pression gazeux (12),
- dans lequel en raison de la pression régnant dans le récipient sous pression (11), l'additif (9) est réacheminé au moins temporairement depuis le récipient sous pression (11) vers une livraison (13) d'additif du poste de filage (15), sachant que le réacheminement s'effectue à l'aide d'une conduite d'alimentation (14) en additif s'étendant indépendamment de la conduite d'alimentation (24) en air.

12. Procédé selon la revendication précédente, **caractérisé en ce que** l'additif (9) est appliqué sur l'ensemble de fibres (3) et/ou introduit dans la filière de filage (1) à l'aide de la livraison (13) d'additif.

13. Procédé selon la revendication 11 ou 12, **caractérisé en ce que** le niveau d'additif du récipient sous pression (11) est surveillé à l'aide d'un capteur (33), et qu'en cas d'écart en moins par rapport à une valeur limite de niveau d'additif, de l'additif (9) est délivré depuis un accumulateur (19) d'additif dans le récipient sous pression (11) jusqu'à ce que soit atteint un niveau d'additif prescrit.

14. Procédé selon l'une des revendications 11 à 13, **caractérisé en ce que** le métier à filer à jet d'air comporte plusieurs postes de filage (15), dans lequel l'additif (9) s'écoule au moins temporairement depuis le récipient sous pression (11) dans une ou plusieurs conduites d'alimentation principales (17) et, de là, via des conduites d'alimentation (14) en additif se dérivant de la ou des conduites d'alimentation principales (17), vers les différentes livraisons (13) d'additif des tuyères de mise en rotation (1).

15. Procédé selon l'une des revendications 11 à 14, **caractérisé en ce que** le récipient sous pression (11) est soumis à une pression absolue dont la valeur se situe entre 1,1 bar et 8,0 bar, de préférence entre 1,5 bar et 7,0 bar.
